# EUROPÄISCHE PATENTSCHRIFT

(11) **EP 3 639 379 B1**
(45) Veröffentlichungstag und Bekanntmachung des Hinweises auf die Patenterteilung: **17.04.2024**
(21) Anmeldenummer: 18731356.4
(22) Anmeldetag: 05.06.2018
(51) Int. Cl.: H04B 1/3805, H04Q 9/00, H04W 52/02, G01D 4/00

(54) **VERFAHREN ZUM BETRIEB EINES ELEKTRONISCHEN DATENERFASSUNGSGERÄTS UND SYSTEM**
METHOD AND SYSTEM FOR OPERATING AN ELECTRONIC DATA-CAPTURING DEVICE
PROCÉDÉ ET SYSTÈME DE COMMANDE D'UN APPAREIL ÉLECTRONIQUE D'ACQUISITION DE DONNÉES

(30) Priorität: 14.06.2017 DE 102017005625
(43) Veröffentlichungstag der Anmeldung: 22.04.2020
(73) Patentinhaber: Diehl Metering Systems GmbH, 90451 Nürnberg (DE)
(72) Erfinder: PETKOV, Hristo, 90425 Nürnberg (DE); LAUTENBACHER, Thomas, 91058 Erlangen (DE); KAUPPERT, Thomas, 90455 Nürnberg (DE); GOTTSCHALK, Klaus, 90610 Winkelhaid (DE)
(74) Vertreter: Diehl Patentabteilung
(86) Internationale Anmeldenummer: PCT/EP2018/000291
(87) Internationale Veröffentlichungsnummer: WO 2018/228720

(56) Entgegenhaltungen:
- DE-A1- 10 142 964
- US-A1- 2010 207 784
- US-A1- 2013 106 616
- US-B2- 7 535 378

## Beschreibung

Die vorliegende Erfindung betrifft ein Verfahren zum Betrieb eines elektronischen Verbrauchsdatenerfassungsgeräts gemäß Anspruch 1. Ferner betrifft die vorliegende Erfindung ein System gemäß Anspruch 10.

### Technologischer Hintergrund

Die Datenübertragung von Messeinheiten, wie z. B. Sensoren, Verbrauchsmessern bzw. Verbrauchsdatenerfassungsgeräten oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchsdatenerfassungsgeräten, sogenannten Smart Metern. Diese sind in der Regel in ein Versorgungsnetz eingebundene Verbrauchsdatenerfassungsgeräte, z. B. für Energie, Strom, Gas oder Wasser, die dem jeweiligen Anschlussbenutzer den tatsächlichen Verbrauch anzeigen und ein Kommunikationsnetz zur Übertragung der Verbrauchsdaten an den Versorger nutzen. Intelligente Verbrauchsdatenerfassungsgeräte haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Gattungsgemäße Verbrauchsdatenerfassungsgeräte übertragen die anfallenden Messdaten in der Regel in Form von Datenpaketen oder Datentelegrammen per Funk, beispielsweise im SRD (Short Range Devices)- oder ISM (Industrial, Scientific, Medical)-Frequenzbereich an übergeordnete Datensammler (z. B. Konzentratoren, Netzwerkknotenpunkte oder Schaltzentralen eines Versorgers). Datentelegramme sind in der Regel aus einer Mehrzahl von Datenpaketen aufgebaut.

Die SRD- oder ISM-Frequenzbereiche haben den Vorteil, dass diese lizenzfrei sind und für die Nutzung lediglich eine allgemeine Zulassung der Frequenzverwaltung notwendig ist. Allerdings besteht das Problem, dass aufgrund der Häufigkeit der Verwendung derartiger Frequenzbereiche für unterschiedlichste technische Einrichtungen, wie etwa Garagentorsteuerungen, Babyphones, Alarmanlagen, WLAN, Bluetooth, Rauchwarnmelder oder dergleichen, es häufig zu Störungen kommen kann.

Elektronische Verbrauchsdatenerfassungsgeräte mit Funksender für drahtlose Datenübertragung werden häufig für eine Walk-In-, Walk-By-, Drive-By- oder Fly-By-Ablesung verwendet. Hierfür werden die Erfassungsgeräte mittels eines mobilen Funkempfängers durch Kundendienstpersonal von einem Fahrzeug aus (Drive-By) im Vorbeifahren oder zu Fuß (Walk-By) im Vorbeigehen abgelesen, ohne dass das abzulesende Gebäude betreten werden muss. Bei den intelligenten Verbrauchsdatenerfassungsgeräten ist zum einen der Energieverbrauch, da diese meist batteriegesteuert sind und möglichst lange Wartungsintervalle aufweisen sollen, und zum anderen die Betriebssicherheit von entscheidender Bedeutung. Bei den obigen Ableseverfahren werden häufig über das ganze Jahr hinweg Funktelegramme ausgesendet, die zur Stromersparnis sehr kurz sind, so dass ein häufiges Senden über einen langen Zeitraum möglich ist. Nichtsdestotrotz besteht ein weiteres Bedürfnis, den Stromverbrauch von Verbrauchsdatenerfassungsgeräten zu senken.

### Druckschriftlicher Stand der Technik

Die US 7,535,378 B2 offenbart ein Zählerablesesystem, welches die Übertragung von Daten zwischen Endpunkten von Versorgungszählern und Auslesegeräten ermöglicht. In einer ersten Ausführungsform sendet der Endpunkt eine Kurznachricht mit seiner Identifikation an das Auslesegerät und geht sofort in einen Empfangsmodus über. Wenn das Auslesegerät die Kurznachricht empfängt, kann es direkt reagieren und zusätzliche Informationen vom Endpunkt anfordern. Wenn das Auslesegerät die Kurznachricht nicht empfängt oder während der Empfangszeit des Endpunkts keine zusätzlichen Informationen anfordert, geht der Endpunkt bis zu seiner nächsten Sendezeit in einen Schlafmodus über. In einer anderen Ausführungsform sendet der Endpunkt eine SCM über einen AM-Kommunikationsweg an das Auslesegerät. Das Auslesegerät kann zusätzliche Informationen anfordern und der Endpunkt kann die Informationen über eine Zweiwege-FM-Kommunikationsweg bereitstellen. In einer anderen Ausführungsform ist der Endpunkt in der Lage, Intervalldaten entweder über einen AM- oder FM-Kommunikationsweg an das Auslesegerät zu übertragen.

In der US 2010/207784 A1 wird ein Zählerdatenerfassungssystem, bei dem ein lizenzierter schmalbandiger Frequenzkanal zum Aufwecken trägerabhängiger, batteriebetriebener Zählerablesegeräte verwendet wird, offenbart. Im Zählerdatenerfassungssystem wird ein nicht lizenzierter Breitbandkanal verwendet, um Datenantworten vom Zählerablesegerät an ein mobiles Datenerfassungsgerät zu übertragen.

Ein Verfahren zum Betrieb eines elektrischen Verbrauchsdatenerfassungsgeräts gemäß dem Oberbegriff des Anspruchs 1 ist aus der DE 101 42 964 B4 bekannt. Dieses Verfahren dient dazu, den Stromverbrauch der Verbrauchsdatenerfassungsgeräte zu optimieren. Hierzu wird ein zeitgesteuertes An- und Abschalten der Datenübertragung in Abhängigkeit vom Wochentag und/oder der Tageszeit beschrieben. Die Programmierung der An- und Abschaltzeitpunkte erfolgt über eine Serviceschnittstelle direkt am Verbrauchsdatenerfassungsgerät oder bereits bei der Herstellung.

Ein Verfahren zur Funkübertragung von Verbrauchsdaten von einem Verbrauchsdatenerfassungsgerät zu Empfängern wird in der DE 10 2004 041 421 C5 beschrieben. Dieses Verfahren sendet Verbrauchsdaten über zwei Sendemodi, wobei der erste Sendemodus ein Spreizbandverfahren und der zweite Sendemodus eine Kanalkodierung ohne Kodemultiplex verwendet. Der Zweck dieses Verfahrens ist es, die Sender an die Erfordernisse der Ablesung anzupassen.

In der WO 2015/074666 A1 ist ein Gerät zum Übertragen von Verbrauchsdaten beschrieben, welches die Verbrauchsdaten als zweiteilige Datentelegramme kodiert und sendet. Die zwei Teile des Datentelegramms weisen dabei unterschiedliche Sendereichweiten auf.

### Aufgabe der vorliegenden Erfindung

Die Aufgabe der vorliegenden Erfindung besteht darin, ein neuartiges Verfahren sowie ein System zur Verfügung zu stellen, bei dem bei einer vorteilhaften Energieeffizienz gleichzeitig eine erhöhte Betriebsflexibilität bei verringerter Wartungsintensität ermöglicht wird.

### Lösung der Aufgabe

Die vorstehende Aufgabe wird durch die gesamte Lehre des Anspruchs 1 sowie durch ein System gemäß Anspruch 10 gelöst. Zweckmäßige Ausgestaltungen der Erfindung sind in den Unteransprüchen beansprucht.

Erfindungsgemäß ist ein erster Betriebsmodus, bei dem die Übertragung der Verbrauchsdaten über ein erstes Funksystem erfolgt, und ein zweiter Betriebsmodus, welcher im Vergleich zum ersten Betriebsmodus eine geringere Sendehäufigkeit und/oder Empfangsbereitschaft aufweist, vorgesehen. Zwischen dem ersten und zweiten Betriebsmodus besteht die Möglichkeit umzuschalten. Dieses Umschalten von erstem und zweitem Betriebsmodus erfolgt mittels eines zweiten Funksystems, wobei das zweite Funksystem z. B. ein Niedrigenergie-Funksystem sein kann. Hierdurch wird es möglich, die Betriebsflexibilität zu erhöhen, da z. B. die An- und Abschaltzeitpunkte der Verbrauchsdatenerfassungsgeräte auch nach deren Installation festgelegt und/oder verändert werden können, indem diesbezügliche Steuersingale über das zweite Funksystem erfindungsgemäß von der Schaltzentrale des Versorgers an das Verbrauchsdatenerfassungsgerät gesendet werden. Somit sind für eine Änderung der An- und Abschaltzeitpunkte im Nachgang keine Serviceleistungen vor Ort notwendig. Zudem wird durch das Verfahren der Betrieb eines Verbrauchsdatenerfassungsgeräts energieeffizienter, indem z. B. nur dann in den ersten Betriebsmodus umgeschaltet werden muss, wenn sich ein Empfänger in der Nähe befindet, d. h. in Reichweite des ersten Funksystems, beispielsweise bei einer bevorstehenden Drive-By-Ablesung. Dadurch besteht keine Bindung an einprogrammierte An- und Abschaltzeitpunkte, deren Festlegung z. B. bereits bei der Herstellung des Verbrauchsdatenerfassungsgeräts erfolgt ist.

Erfindungsgemäß weist das zweite Funksystem im Vergleich zum ersten Funksystem eine höhere Reichweite auf. Daraus resultiert der Vorteil, dass ausgehend von einer zentralen Sendeeinheit, z. B. einer Kommunikationseinheit des zweiten Funksystems und/oder der Schaltzentrale des Versorgers, über das zweite Funksystem eine größere Anzahl an Verbrauchsdatenerfassungsgeräten erreicht werden kann, d. h. eine flächendeckende Kommunikation mit den Verbrauchsdatenerfassungsgeräten erfolgen kann. Dementsprechend kann eine flächendeckende Kommunikation mit vergleichsweise wenigen zentralen Sendeeinheiten des zweiten Funksystems bewerkstelligt werden.

Der zweite Betriebsmodus kann am Verbrauchsdatenerfassungsgerät im Vergleich zum ersten Betriebsmodus einen geringeren Stromverbrauch im Nichtsendebetrieb bedingen, da das Verbrauchsdatenerfassungsgerät im zweiten Betriebsmodus nicht über das erste Funksystem sendet. Dadurch kann das Verbrauchsdatenerfassungsgerät über das zweite Funksystem angesprochen werden, während Funktionen mit einem höheren Stromverbrauch, wie z. B. das Senden der Verbrauchsdaten über das erste Funksystem, deaktiviert werden können. Der zweite Betriebsmodus kann somit ein Energiesparmodus oder ein Standby Betrieb sein.

Dadurch, dass die Übertragungsmöglichkeit bzw. Aktivierbarkeit über das zweite Funksystem bestehen bleibt, kann das erste Funksystem zumindest teilweise, vorzugsweise vollständig, deaktiviert werden.

Vorzugsweise können die Zeitpunkte des Umschaltens zwischen erstem und zweitem Betriebsmodus individuell variierbar sein, wodurch z. B. keine Bindung an einen einprogrammierten Zeitplan besteht. Das Umschalten kann somit allein von den geplanten Übertragungen der Verbrauchsdaten abhängig gemacht werden.

Das Umschalten zwischen erstem und zweitem Betriebsmodus umfasst in einer Ausgestaltung auch ein Einschalten des ersten Funksystems. Beispielsweise ist das Einschalten in dem Fall erforderlich, in dem das erste Funksystem im zweiten Betriebsmodus teilweise oder vollständig deaktiviert ist. Ferner kann das Umschalten auch das Abschalten des ersten Funksystems umfassen.

Ferner kann es vorgesehen sein, mindestens einen Sendezeitplan im Verbrauchsdatenerfassungsgerät zu hinterlegen. Dieser Sendezeitplan kann vorzugsweise über das zweite Funksystem konfigurierbar und/oder aktivierbar und/oder deaktivierbar sein. Der Sendezeitplan enthält z. B. die Zeiten, zu welchen über das erste Funksystem die Verbrauchsdaten gesendet werden sollen. Somit kann beispielsweise auf eine Fahrtstreckenänderung bei einer mobilen Drive-By-Ablesung mit einer neuen Konfiguration des Sendezeitplans über das zweite Funksystem reagiert werden. Es können zweckmäßigerweise auch mehr als ein Sendezeitplan im Verbrauchsdatenerfassungsgerät hinterlegt sein, wobei die einzelnen Sendezeitpläne nach Bedarf über das zweite Funksystem konfigurierbar und/oder aktivierbar und/oder deaktivierbar sind.

In einer weiteren Ausgestaltung des Verfahrens ist es möglich, die Parameter des ersten Funksystems über das zweite Funksystem zu konfigurieren. Die Konfiguration der Parameter kann dabei vorzugsweise eine Anpassung der Übertragungskapazität durch eine effiziente Nutzung des Frequenzspektrums und/oder eine Anpassung der Funkübertragung an den Kapazitätsbedarf umfassen. Zweckmäßigerweise kann zusätzlich oder alternativ auch eine Anpassung von Sendeschemata vorgenommen werden, welche z. B. die Zeitabstände zwischen Sendewiederholungen im ersten Funksystem betreffen. Somit kann beispielsweise die Übertragung der Verbrauchsdaten über das erste Funksystem durch eine Erhöhung der Sendewiederholungsfrequenz während einer Drive-By-Ablesung bei Bedarf verbessert werden.

Vorzugsweise kann der durch das erste Funksystem verwendete Frequenzbereich den SRD- und/oder den ISM-Frequenzbereich umfassen. Zweckmäßigerweise kann die Übermittlung der Verbrauchsdaten an den Empfänger von einer Vielzahl individueller Verbrauchsdatenerfassungsgeräte erfolgen.

Vorzugsweise kann jedes individuelle Verbrauchsdatenerfassungsgerät aus der Vielzahl von Verbrauchsdatenerfassungsgeräten über einen individuellen Sendezeitplan verfügen. Dieser Sendezeitplan ist beispielsweise an die Fahrtstrecke einer mobilen Drive-By-Ablesung angepasst.

Ferner besteht zweckmäßigerweise die Möglichkeit, aus der vorgenannten Vielzahl von Verbrauchsdatenerfassungsgeräten mittels des zweiten Funksystems ein individuelles Verbrauchsdatenerfassungsgerät anzuwählen, welches zwischen dem ersten und zweiten Betriebsmodus umgeschaltet wird. Insbesondere kann von einer zentralen Sendeeinheit aus eine Vielzahl von Verbrauchsdatenerfassungsgeräten über das zweite Funksystem individuell gesteuert, d. h. individuell angesteuert, werden. Dadurch kann beispielsweise auf eine außerplanmäßige Änderung der Route einer Drive-By-Ablesung der Verbrauchsdatenerfassungsgeräte flexibel und kurzfristig reagiert werden, indem von einer zentralen Stelle aus das Umschalten zwischen dem ersten und zweiten Betriebsmodus durchgeführt und überwacht wird, ohne dass jedes individuelle Verbrauchsdatenerfassungsgerät vor Ort angepasst werden muss.

Erfindungsgemäß handelt es sich bei dem Empfänger um einen mobilen Datensammler oder einen stationären Datensammler. Der mobile Datensammler wird zweckmäßigerweise beispielsweise für Drive-By-Ablesungen verwendet. Nebengeordnet beansprucht die vorliegende Erfindung auch ein System gemäß

Anspruch 10. Das erfindungsgemäße System umfasst ein Verbrauchsdatenerfassungsgerät. Letzteres umfasst eine Messeinheit zur Erfassung der Verbrauchsdaten, einen Speicher, in welchem die Verbrauchsdaten speicherbar sind, und mindestens einen Prozessor. Ferner ist ein Kommunikationsmodul zur Verbrauchsdatenübertragung vorgesehen, welches über ein erstes Funksystem Verbrauchsdaten senden kann. Zudem verfügt das Kommunikationsmodul über ein zweites Funksystem. Darüber hinaus ist für den Betrieb des Verbrauchsdatenerfassungsgeräts in der Steuerung des Verbrauchsdatenerfassungsgeräts ein erster Betriebsmodus vorgesehen, in dem die Übertragung der Verbrauchsdaten über das erste Funksystem erfolgt und ein zweiter Betriebsmodus, welcher im Vergleich zum ersten Betriebsmodus eine geringere Sendehäufigkeit und/oder Empfangsbereitschaft hat. Zwischen dem ersten und zweiten Betriebsmodus besteht die Möglichkeit umzuschalten. Erfindungsgemäß erfolgt das Umschalten von erstem und zweitem Betriebsmodus mittels des zweiten Funksystems. Dadurch können beispielsweise auch nach Installation des Verbrauchsdatenerfassungsgeräts die An- und Abschaltzeitpunkte festgelegt und bei Bedarf sogar variiert werden, indem diese über das zweite Funksystem erfindungsgemäß von einer Schaltzentrale des Versorgers an das Verbrauchsdatenerfassungsgerät gesendet werden. Somit erhöht sich die Betriebsflexibilität und es besteht keine Notwendigkeit mehr, Serviceleistungen vor Ort am Verbrauchsdatenerfassungsgerät durchzuführen, um die An- und Abschaltzeitpunkte zu ändern. Der Betrieb eines Verbrauchsdatenerfassungsgeräts wird zudem energieeffizienter, indem z. B. nur dann in den ersten Betriebsmodus umgeschaltet wird, wenn sich ein Empfänger in der Nähe befindet, d. h. in Reichweite des ersten Funksystems, beispielsweise bei einer bevorstehenden Drive-By-Ablesung.

Erfindungsgemäß hat das zweite Funksystem im Vergleich zum ersten Funksystem eine höhere Reichweite.

Zweckmäßigerweise kann der zweite Betriebsmodus am Verbrauchsdatenerfassungsgerät im Vergleich zum ersten Betriebsmodus einen geringeren Stromverbrauch im Nichtsendebetrieb bedingen.

Vorzugsweise kann in dem zweiten Betriebsmodus des Verbrauchsdatenerfassungsgeräts das erste Funksystem zumindest teilweise, vorzugsweise vollständig, deaktiviert sein.

Zweckmäßigerweise kann das Umschalten zwischen erstem und zweitem Betriebsmodus am Verbrauchsdatenerfassungsgerät ein Einschalten und/oder Abschalten des ersten Funksystems umfassen.

Gemäß einer weiteren Ausgestaltung ist im Speicher des Verbrauchsdatenerfassungsgeräts mindestens ein Sendezeitplan hinterlegt, der über das zweite Funksystem konfigurierbar und/oder aktivierbar und/oder deaktivierbar ist.

Vorzugsweise können Parameter des ersten Funksystems im Verbrauchsdatenerfassungsgerät über das zweite Funksystem konfigurierbar sein.

Zweckmäßigerweise kann das erste Funksystem des Verbrauchsdatenerfassungsgeräts einen SRD- und/oder einen ISM-Frequenzbereich verwenden.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte schematische Darstellung mehrerer Verbrauchsdatenerfassungsgeräte, welche jeweils über ein erstes Funksystem mit einem mobilen Datensammler in Reichweite und zusätzlich über ein zweites Funksystem mit einer Kommunikationseinheit des zweiten Funksystems kommunizieren;
- Fig. 2: das Umschalten zwischen einem ersten und einem zweiten Betriebsmodus in Abhängigkeit der Fahrtstrecke eines mobilen Datensammlers;
- Fig. 3: das Umschalten zwischen einem ersten und einem zweiten Betriebsmodus in Abhängigkeit der Anwesenheit eines mobilen Datensammlers in der Nähe eines Verbrauchsdatenerfassungsgeräts;
- Fig. 4: ein stark vereinfachtes schematisches Blockschaltbild einer Ausgestaltung des Verbrauchsdatenerfassungsgeräts sowie dessen Komponenten;
- Fig. 5: den zeitlichen Verlauf des Betriebs des ersten und zweiten Funksystems beim Umschalten vom ersten in den zweiten Betriebsmodus;
- Fig. 6: den zeitlichen Verlauf beim Ändern von Parametern betreffend die Sendeschemata des ersten Funksystems mittels zweitem Funksystem;
- Fig. 7: ein beispielhaftes Ablaufdiagramm zweckmäßiger Schritte zum Umschalten vom zweiten Betriebsmodus in den ersten Betriebsmodus für eine Ablesung der Verbrauchsdaten;

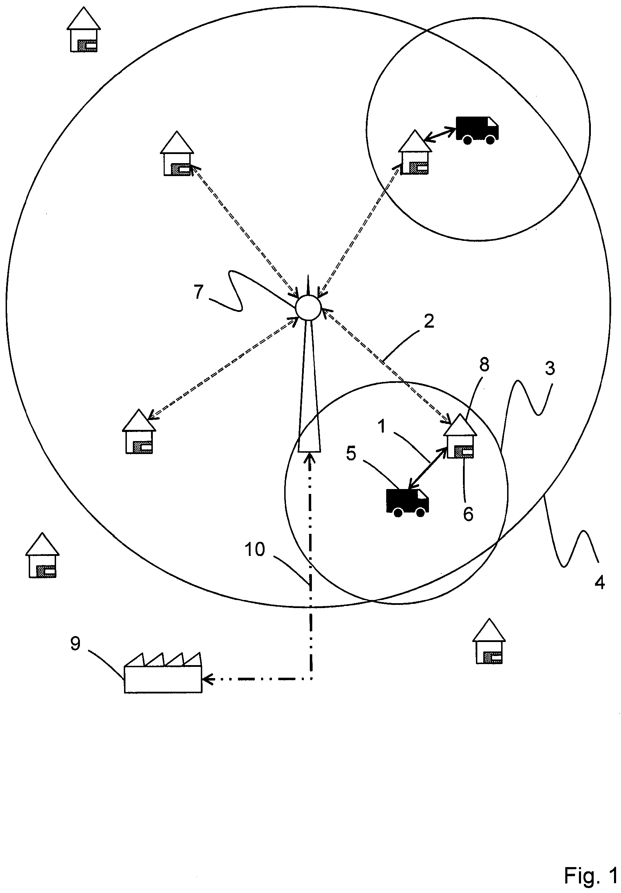

Bezugsziffer 1 in Fig. 1 bezeichnet ein erstes Funksystem, z. B. Wireless M-Bus. Die Pfeile an beiden Enden verdeutlichen die Funkübertragung. Die maximale Funkreichweite des ersten Funksystems 1 wird dabei durch den Radius des mit Bezugsziffer 3 bezeichneten Kreises schematisch dargestellt. Analog ist die maximale Funkreichweite eines zweiten Funksystems 2, beispielsweise ein Low Power Wide Area Network (LPWAN), wie z. B. Sigfox oder LoRaWAN, mithilfe des Kreises 4 schematisch angezeigt. Zweckmäßigerweise können beliebige Funksysteme für das erste bzw. das zweite Funksystem (1 bzw. 2) kombiniert werden.

Die Verbrauchsdatenerfassungsgeräte 6 umfassen dabei Funkeinrichtungen 18 bzw. 19 für das erste bzw. das zweite Funksystem 1 bzw. 2. Ferner sind für die Verbrauchsdatenerfassungsgeräte 6 zwei Betriebsmodi 11 bzw. 12 vorgesehen. Im ersten Betriebsmodus 11 ist die Kommunikation mittels ersten und zweitem Funksystem 1 bzw. 2 möglich (Datenübertragungsmodus). Im zweiten Betriebsmodus 12 ist das erste Funksystem 1 vorzugsweise deaktiviert, um Energie zu sparen (Energiesparmodus). Zwischen dem ersten und zweiten Betriebsmodus 11 bzw. 12 kann mittels Signalen über das zweite Funksystem 2 umgeschaltet werden. Die Kommunikation über das erste Funksystem 1 findet dabei zwischen einem Datensammler 5 und einer Mehrzahl von individuellen Verbrauchsdatenerfassungsgeräten 6 statt. Das jeweilige Verbrauchsdatenerfassungsgerät 6 übermittelt den aktuellen individuellen Zählerstand in Form von Verbrauchsdaten über das erste Funksystem 1 an den Datensammler 5. Der Datensammler 5 kann dabei stationär betrieben werden oder, wie beispielsweise in Fig. 1 dargestellt, als mobile Einheit in einem Fahrzeug installiert sein. Die Verbrauchsdatenerfassungsgeräte 6 sind vorzugsweise stationär in Gebäuden 8 installiert. Dabei kann es sich um alle Arten von Gebäuden 8 handeln. Verbrauchsdatenerfassungsgeräte 6, welche sich innerhalb der Funkreichweite 3 des ersten Funksystems 1 befinden, übermitteln Daten an den Datensammler 5 über das erste Funksystem 1. Befinden sich die Verbrauchsdatenerfassungsgeräte 6 außerhalb der Funkreichweite 3, können keine Daten über das erste Funksystem 1 an den Datensammler 5 übermittelt werden.

Für die Kommunikation über das zweite Funksystem 2 ist eine Kommunikationseinheit 7 des zweiten Funksystems 2 vorgesehen. Die Kommunikationseinheit 7 des zweiten Funksystems 2 befindet sich vorzugsweise auf einer Anhöhe, einem hohen Gebäude, einem Turm, beispielsweise in einem Fernsehturm, oder einem vergleichbaren für die Funkübertragung geeigneten Ort. In Fig. 1 befindet sich die Kommunikationseinheit 7 in einem Fernsehturm. Die Kommunikationseinheit 7 des zweiten Funksystems 2 steht dabei in Kontakt mit der Schaltzentrale 9 eines Energieversorgers. Von dieser werden Steuersignale über die Signalübertragung 10 übermittelt. Die Steuersignale umfassen dabei Umschaltsignale 21 bzw. 22, um zwischen dem ersten und zweiten Betriebsmodus 11 bzw. 12 des Verbrauchsdatenerfassungsgeräts 6 umzuschalten. Die Ausgestaltung der Signalübertragung 10 kann über eine Kabelverbindung oder eine Funkübertragung realisiert sein. Verbrauchsdatenerfassungsgeräte 6, welche sich innerhalb der Funkreichweite 4 des zweiten Funksystems 2 befinden, können über das zweite Funksystem 2 mit der Kommunikationseinheit 7 des zweiten Funksystems 2 kommunizieren. Die Verbrauchsdatenerfassungsgeräte 6 außerhalb der Funkreichweite 4 können nicht über das zweite Funksystem 2 mit der Kommunikationseinheit 7 kommunizieren.

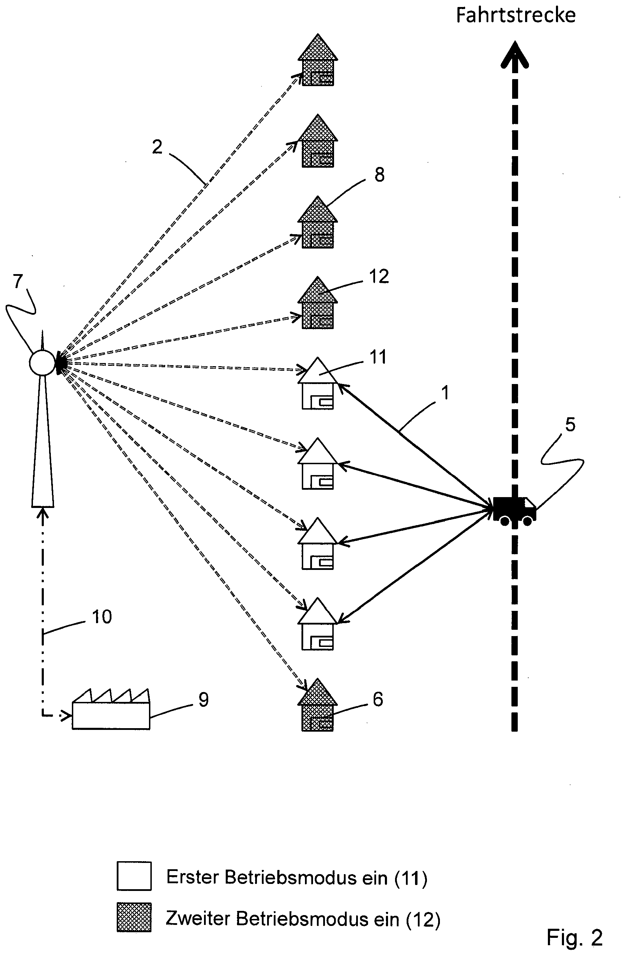

In Fig. 2 ist das Umschalten zwischen erstem und zweitem Betriebsmodus 11 bzw. 12 des Verbrauchsdatenerfassungsgeräts 6 in Abhängigkeit der Fahrtstrecke des mobilen Datensammlers 5 beispielhaft dargestellt. Alle Verbrauchsdatenerfassungsgeräte 6 stehen mit der Kommunikationseinheit 7 des zweiten Funksystems 2 über das zweite Funksystem 2 in Verbindung. Die Schaltzentrale 9 des Versorgers schaltet die Betriebsmodi 11 bzw. 12 der Verbrauchsdatenerfassungsgeräte 6 in Abhängigkeit der Fahrtstrecke des mobilen Datensammlers 5 zwischen erstem Betriebsmodus 11 und zweitem Betriebsmodus 12 um. So sind die Verbrauchsdatenerfassungsgeräte 6, welche sich auf der Fahrtstrecke befinden, aber noch nicht in Funkreichweite 3 des ersten Funksystems 1 sind, im zweiten Betriebsmodus 12, d. h. im Betriebsmodus mit reduziertem Energieverbrauch. Nähert sich der mobile Datensammler 5 der Funkreichweite 3 des ersten Funksystems 1 eines individuellen Verbrauchsdatenerfassungsgeräts 6, wird dieses von der Schaltzentrale 9 aus in den ersten Betriebsmodus 11 umgeschaltet. Sobald sich der mobile Datensammler 5 nicht mehr in Funkreichweite 3 des ersten Funksystems 1 zum Verbrauchsdatenerfassungsgerät 6 befindet, wird dieses von der Schaltzentrale 9 aus wieder über das zweite Funksystem 2 in den zweiten Betriebsmodus 12 umgeschaltet.

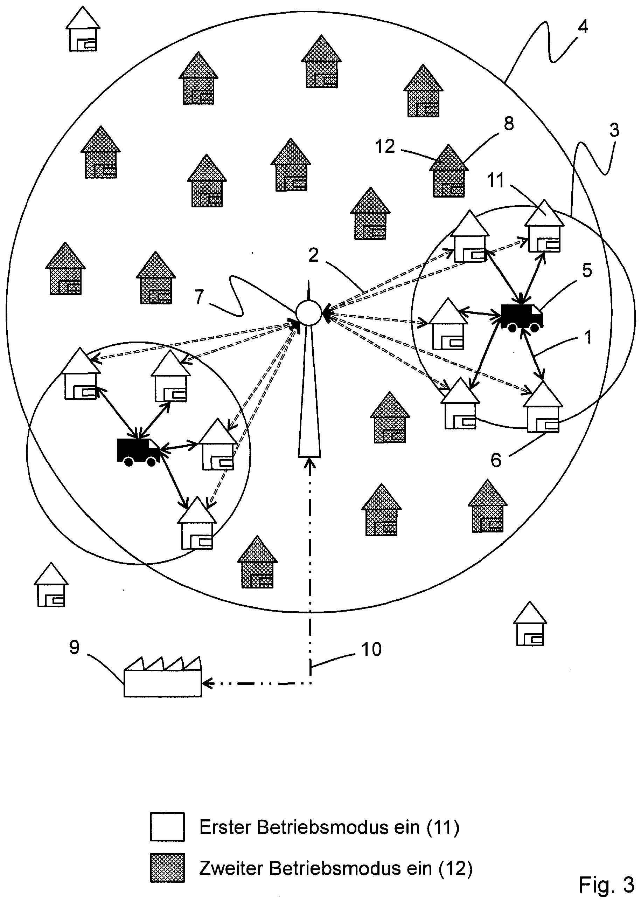

Fig. 3 zeigt eine zweckmäßige Ausgestaltung des erfindungsgemäßen Verfahrens. Über das zweite Funksystem 2 kann zwischen dem ersten Betriebsmodus 11 und dem zweiten Betriebsmodus 12 wahlweise umgeschaltet werden. So ist in Fig. 3 beispielhaft die Möglichkeit des Umschaltens zwischen erstem und zweitem Betriebsmodus 11 bzw. 12 der Verbrauchsdatenerfassungsgeräte 6 innerhalb der Funkreichweite 4 des zweiten Funksystems 2 gezeigt. Um Energie zu sparen, werden die Verbrauchsdatenerfassungsgeräte 6, welche sich im ersten Betriebsmodus 11, aber nicht in Funkreichweite 3 des ersten Funksystems 1 eines Datensammlers 5 befinden, über das zweite Funksystem 2 in den zweiten Betriebsmodus 12 umgeschaltet. Ist dagegen ein Auslesen der Verbrauchsdatenerfassungsgeräte 6 über das erste Funksystem 1 geplant, beispielsweise durch Walk-By oder Drive-By, wird in den ersten Betriebsmodus 11 der Verbrauchsdatenerfassungsgeräte 6, welche sich in Funkreichweite 3 oder auf der geplanten Route des jeweiligen Datensammlers 5 befinden, über das zweite Funksystem 2 umgeschaltet. Weiter zeigt Fig. 3 den Kontakt der Kommunikationseinheit 7 des zweiten Funksystems 2 mit der Schaltzentrale 9 über die Signalübertragung 10.

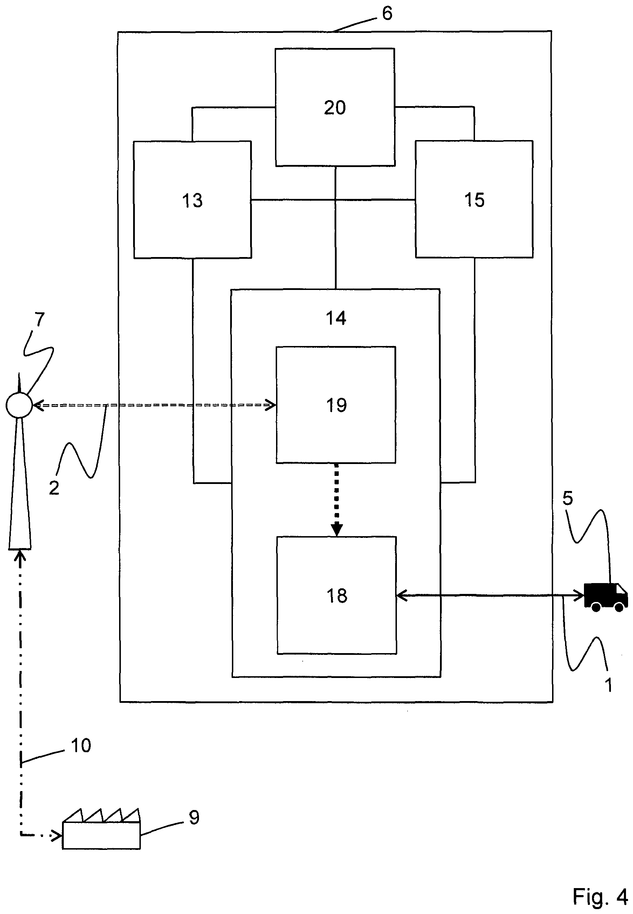

In Fig. 4 ist eine zweckmäßige Ausgestaltung des erfindungsgemäßen Verbrauchsdatenerfassungsgeräts 6, sowie dessen interne Kommunikation, als Blockschaltbild dargestellt. Das Verbrauchsdatenerfassungsgerät 6 umfasst einen Speicher 13, ein Kommunikationsmodul 14, einen Prozessor 15, eine erste Funkeinrichtung 18 für das erste Funksystem 1 sowie eine zweite Funkeinrichtung 19 für das zweite Funksystem 2 und eine Messeinheit 20 zur Erfassung der Verbrauchsdaten. Das Kommunikationsmodul 14 ist zur Verarbeitung der Daten zu Funktelegrammen ausgestaltet. Ferner umfasst das Kommunikationsmodul 14 die erste sowie die zweite Funkeinrichtung (18 bzw. 19). Die erste und zweite Funkeinrichtung (18 bzw. 19) können auch physikalisch als ein Funk-Chip ausgestaltet und lediglich logisch getrennt sein. Zudem könnte das Kommunikationsmodul 14 zweckmäßigerweise zusätzlich zum eingezeichneten Prozessor 15 einen weiteren eigenen Prozessor umfassen. Die erste Funkeinrichtung 18 steht dabei über das erste Funksystem 1 mit dem Datensammler 5 in Verbindung. Die zweite Funkeinrichtung 19 steht über das zweite Funksystem 2 mit der Kommunikationseinheit 7 in Verbindung. Die Kommunikationseinheit 7 steht wiederum mit der Schaltzentrale 9 über eine Signalübertragung 10 in Verbindung. Die erste Funkeinrichtung 18 steht dabei intern mit der zweiten Funkeinrichtung 19 in Verbindung. In einer Ausgestaltung können die über das zweite Funksystem 2 in der zweiten Funkeinrichtung 19 empfangenen Signale die Funktionen und die Parameter der ersten Funkeinrichtung 18 für das erste Funksystem 1 beeinflussen bzw. verändern.

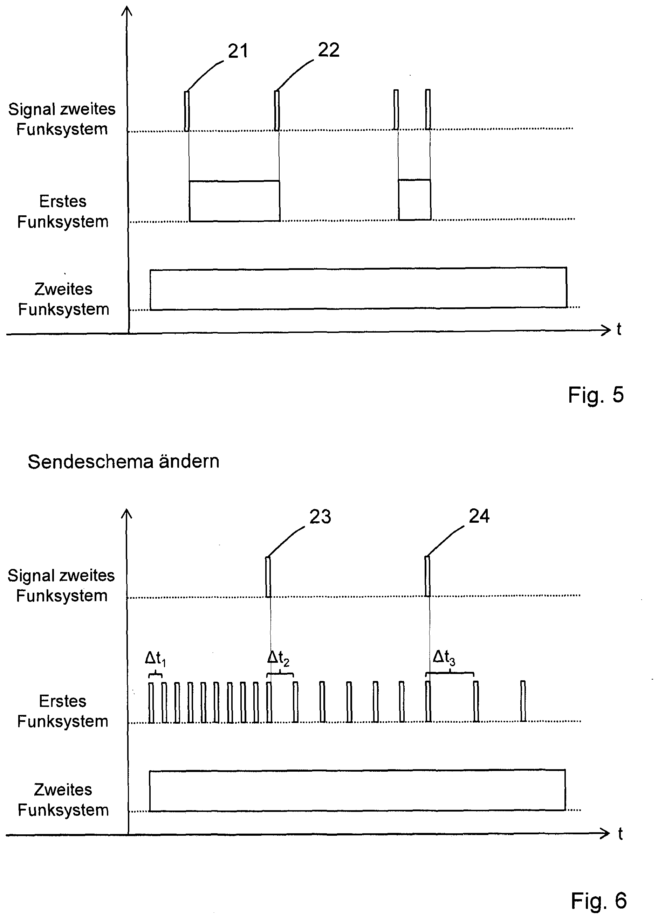

Fig. 5 und Fig. 6 zeigen zeitliche Verlaufsdiagramme des ersten Funksystems 1 und des zweiten Funksystems 2.

In Fig. 5 ist das Umschalten von erstem und zweitem Betriebsmodus 11 bzw. 12 gezeigt. Das Umschalten zwischen den Betriebsmodi 11 bzw. 12 hat zur Folge, dass das erste Funksystem 1 durch das zweite Funksystem 2 aktiviert oder deaktiviert wird. Vorzugsweise ist das zweite Funksystem 2 permanent aktiviert. Das Verbrauchsdatenerfassungsgerät 6 befindet sich im zweiten Betriebsmodus 12, mit dem ersten Funksystem 1 deaktiviert, d. h. in einem Energiesparmodus. Bei einem ersten Signal, z. B. einem Einschaltsignal 21, über das zweite Funksystem 2 wird vom zweiten Betriebsmodus 12 in den ersten Betriebsmodus 11 umgeschaltet. Dadurch wird das erste Funksystem 1 aktiviert. Jetzt können beispielsweise Verbrauchsdaten vom Verbrauchsdatenerfassungsgerät 6 an einen Datensammler 5 über das erste Funksystem 1 gesendet werden. Beim zweiten Signal des zweiten Funksystems 2, z. B. einem Abschaltsignal 22, wird vom ersten Betriebsmodus 11 wieder in den zweiten Betriebsmodus 12 umgeschaltet. Das erste Funksystem 1 wird dadurch deaktiviert. Es können keine Verbrauchsdaten mehr über das erste Funksystem 1 gesendet werden. Analog wird zwischen erstem Betriebsmodus 11 und zweitem Betriebsmodus 12 beim dritten und vierten Signal über das zweite Funksystem 2 umgeschaltet. Die Zeitspanne in der sich das Verbrauchsdatenerfassungsgerät 6 im ersten Betriebsmodus 11 befindet und somit das erste Funksystem 1 aktiviert ist, ist wie in Fig. 5 dargestellt, beliebig individuell variierbar. Beispielsweise kann das zweite Signal, d. h. das Abschaltsignal 22, nach einer vorgegebenen Zeitspanne automatisch generiert werden.

Fig. 6 zeigt beispielhaft schematisch das Umschalten zwischen verschiedenen Sendeschemata, nach welchen die Verbrauchsdaten über das erste Funksystem 1 übertragen werden. Das zweite Funksystem 2 ist permanent aktiviert. Das Verbrauchsdatenerfassungsgerät 6 befindet sich in Fig. 6 anfänglich im ersten Betriebsmodus 11, d. h. das erste Funksystem 1 und das zweite Funksystem 2 sind aktiviert. Das erste Funksystem 1 sendet die Verbrauchsdaten anfänglich mit einem Zeitintervall zwischen Sendewiederholungen von Δt₁, wobei Δt, beispielsweise 5 Sekunden beträgt. Durch das erste Konfigurationssignal 23, übertragen über das zweite Funksystem 2, hier beispielhaft nach zehn Sendewiederholungen mit Zeitintervallen von Δt₁, werden Parameter der ersten Funkeinrichtung 18 für das erste Funksystem 1 konfiguriert. In Fig. 6 ist der konfigurierbare Parameter beispielsweise das Zeitintervall Δt zwischen Sendewiederholungen des ersten Funksystems 1. So sendet die erste Funkeinrichtung 18 für das erste Funksystem 1 fortan, nach dem Konfigurationssignal 23, mit einem Zeitintervall Δt₂ zwischen Sendewiederholungen. Das Zeitintervall Δt₂ ist beispielsweise 10 Sekunden lang. Für eine mobile Drive-By Ablesung wird zur Übertragung der Verbrauchsdaten für gewöhnlich eine höhere Sendewiederholungsfrequenz, d. h. kürzere Zeitintervalle Δt, benötigt, als für eine Ablesung mittels eines stationären Datensammlers 5. Damit eignen sich in diesem Beispiel die Zeitintervalle Δt₁ und Δt₂ zwischen Sendewiederholungen für eine Auslesung des Verbrauchsdatenerfassungsgeräts 6 mittels eines mobilen Datensammlers 5. Nach dem zweiten Konfigurationssignal 24 über das zweite Funksystem 2 wird hier beispielsweise das Zeitintervall zwischen Sendewiederholungen des ersten Funksystems 1 auf Δt₃ gesetzt. Das Zeitintervall At₃ ist in diesem Beispiel deutlich länger als Δt₁ oder Δt₂, mit beispielsweise 10 Minuten. Das Zeitintervall Δt₃ zwischen Sendewiederholungen des ersten Funksystems 1 eignet sich beispielsweise für eine Auslesung mittels eines stationären Datensammlers 5. Die Darstellung der Zeitintervalle Δt₁ bis Δt₃ zwischen Sendewiederholungen ist nicht maßstabsgetreu.

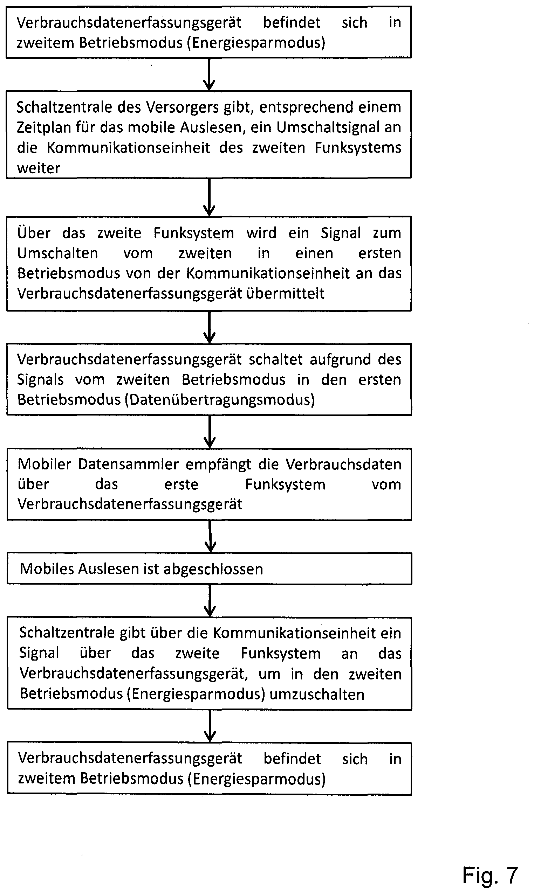

Fig. 7 zeigt einen beispielhaften Ablauf, wie das erfindungsgemäße Verfahren und das erfindungsgemäße Verbrauchsdatenerfassungsgerät 6 zum Einsatz kommen. Das Verbrauchsdatenerfassungsgerät 6 befindet sich anfänglich im zweiten Betriebsmodus 12, mit dem ersten Funksystem 1 ausgeschaltet und dem zweiten Funksystem 2 eingeschaltet, d. h. im Energiesparmodus. Im zweiten Schritt gibt die Schaltzentrale 9, entsprechend einem Zeitplan für das mobile Auslesen, ein Umschaltsignal an die Kommunikationseinheit 7 weiter. Über das zweite Funksystem 2 wird dadurch im dritten Schritt ein Signal zum Umschalten von zweitem Betriebsmodus 12 in den ersten Betriebsmodus 11 an das Verbrauchsdatenerfassungsgerät 6 übermittelt. Im nächsten Schritt schaltet das Verbrauchsdatenerfassungsgerät 6, aufgrund des vorangegangenen Signals, vom zweiten Betriebsmodus 12 in den ersten Betriebsmodus 11, mit dem ersten 1 und zweiten Funksystem 2 eingeschaltet, d. h. in den Datenübertragungsmodus. Im fünften Schritt kann der mobile Datensammler 5 die Verbrauchsdaten über das erste Funksystem 1 vom Verbrauchsdatenerfassungsgerät 6 empfangen. Nach dem abgeschlossenen Auslesen gibt die Schaltzentrale 9 über die Kommunikationseinheit 7 ein Signal über das zweite Funksystem 2 an das Verbrauchsdatenerfassungsgerät 6, um in den zweiten Betriebsmodus 12, den Energiesparmodus, umzuschalten. Im letzten Schritt befindet sich das Verbrauchsdatenerfassungsgerät 6 wieder im zweiten Betriebsmodus 12, d. h. im Energiesparmodus, mit dem ersten Funksystem 1 ausgeschaltet und dem zweiten Funksystem 2 eingeschaltet.

Ausdrücklich vom Offenbarungsgehalt umfasst sind auch Einzelmerkmalskombinationen (Unterkombinationen) sowie mögliche, nicht in den Zeichnungsfiguren dargestellte, Kombinationen einzelner Merkmale unterschiedlicher Ausgestaltungsformen.

### BEZUGSZEICHENLISTE

- 1: Erstes Funksystem
- 2: Zweites Funksystem
- 3: Funkreichweite des ersten Funksystems
- 4: Funkreichweite des zweiten Funksystems
- 5: Datensammler
- 6: Verbrauchsdatenerfassungsgerät
- 7: Kommunikationseinheit des zweiten Funksystems
- 8: Gebäude
- 9: Schaltzentrale
- 10: Signalübertragung
- 11: Erster Betriebsmodus eingeschaltet
- 12: Zweiter Betriebsmodus eingeschaltet
- 13: Speicher
- 14: Kommunikationsmodul
- 15: Prozessor
- 18: Funkeinrichtung für das erste Funksystem
- 19: Funkeinrichtung für das zweite Funksystem
- 20: Messeinheit zur Erfassung der Verbrauchsdaten
- 21: Einschaltsignal des ersten Funksystems über das zweite Funksystem
- 22: Abschaltsignal des ersten Funksystems über das zweite Funksystem
- 23: Erstes Konfigurationssignal
- 24: Zweites Konfigurationssignal

## Patentansprüche

1. Verfahren zum Betrieb eines elektronischen Verbrauchsdatenerfassungsgeräts (6),
wobei die Verbrauchsdaten über ein erstes Funksystem (1) drahtlos zu einem Empfänger in Form eines mobilen Datensammlers (5) oder stationären Datensammlers (5) übertragen werden, und
wobei für den Betrieb des Verbrauchsdatenerfassungsgeräts (6) ein erster Betriebsmodus (11) vorgesehen ist, in dem die Übertragung der Verbrauchsdaten über das erste Funksystem (1) erfolgt, und
ein zweiter Betriebsmodus (12) vorgesehen ist, welcher im Vergleich zum ersten Betriebsmodus (11) eine geringere Sendehäufigkeit und/oder Empfangsbereitschaft hat, und
zwischen dem ersten und zweiten Betriebsmodus (11 bzw. 12) umschaltbar ist,
wobei das Umschalten von erstem und zweitem Betriebsmodus (11 bzw. 12) mittels eines zweiten Funksystems (2) erfolgt, welches eine mit einer Schaltzentrale (9) eines Energieversorgers in Kontakt stehende Kommunikationseinheit (7) umfasst, von der für das Umschalten zwischen erstem und zweitem Betriebsmodus (11 bzw. 12) Umschaltsignale (21, 22) umfassende Steuersignale an das Verbrauchsdatenerfassungsgerät (6) gesendet werden, und wobei
das zweite Funksystem (2) im Vergleich zum ersten Funksystem (1) eine höhere Reichweite hat.

2. Verfahren nach Anspruch 1, **dadurch gekennzeichnet, dass** der zweite Betriebsmodus (12) am Verbrauchsdatenerfassungsgerät (6) im Vergleich zum ersten Betriebsmodus (11) einen geringeren Stromverbrauch im Nichtsendebetrieb hat.

3. Verfahren nach einem der vorhergehenden Ansprüche, **dadurch gekennzeichnet, dass** bei dem zweiten Betriebsmodus (12) das erste Funksystem (1) zumindest teilweise, vorzugsweise vollständig, deaktiviert ist.

4. Verfahren nach einem der vorhergehenden Ansprüche, **dadurch gekennzeichnet, dass** die Zeitpunkte des Umschaltens zwischen erstem und zweitem Betriebsmodus (11 bzw. 12) in Abhängigkeit der geplanten Übertragung der Verbrauchsdaten individuell variierbar sind.

5. Verfahren nach einem der vorhergehenden Ansprüche, **dadurch gekennzeichnet, dass** das Umschalten zwischen erstem und zweitem Betriebsmodus (11 bzw. 12) ein Einschalten und/oder Abschalten des ersten Funksystems (1) umfasst.

6. Verfahren nach einem der vorhergehenden Ansprüche, **dadurch gekennzeichnet, dass** mindestens ein Sendezeitplan im Verbrauchsdatenerfassungsgerät (6) hinterlegt ist, der über das zweite Funksystem (2) konfigurierbar und/oder aktivierbar und/oder deaktivierbar ist.

7. Verfahren nach einem der vorhergehenden Ansprüche, **dadurch gekennzeichnet, dass** Parameter des ersten Funksystems (1) über das zweite Funksystem (2) konfigurierbar sind.

8. Verfahren nach einem der vorhergehenden Ansprüche, **dadurch gekennzeichnet, dass** das erste Funksystem (1) einen SRD- und/oder einen ISM-Frequenzbereich verwendet.

9. Verfahren nach einem der vorhergehenden Ansprüche, **dadurch gekennzeichnet, dass** eine Vielzahl von individuellen Verbrauchsdatenerfassungsgeräten (6) vorgesehen ist, die Verbrauchsdaten an den Empfänger übermitteln, wobei insbesondere vorgesehen ist, **dass** zu den individuellen Verbrauchsdatenerfassungsgeräten (6) individuelle Sendezeitpläne vorgesehen sind und/oder aus der Vielzahl der Verbrauchsdatenerfassungsgeräte (6) mittels des zweiten Funksystems (2) ein individuelles Verbrauchsdatenerfassungsgerät (6) ausgewählt wird, welches zwischen dem ersten und zweiten Betriebsmodus (11 bzw. 12) umgeschaltet wird.

10. System umfassend
ein erstes Funksystem (1),
ein zweites Funksystem (2) welches eine mit einer Schaltzentrale (9) eines Energieversorgers in Kontakt stehende Kommunikationseinheit (7) umfasst, die ausgebildet ist für das Umschalten zwischen erstem und zweitem Betriebsmodus (11 bzw. 12) Umschaltsignale (21, 22) umfassende Steuersignale an das Verbrauchsdatenerfassungsgerät (6) zu senden sowie
ein Verbrauchsdatenerfassungsgerät (6) mit
einer Messeinheit (20) zur Erfassung der Verbrauchsdaten,
einem Speicher (13), in welchem die Verbrauchsdaten speicherbar sind,
mindestens einem Prozessor (15), und
einem Kommunikationsmodul (14) zur Verbrauchsdatenübertragung, wobei
das Kommunikationsmodul (14) dazu ausgebildet ist über das erstes Funksystem (1) Verbrauchsdaten zu einem Empfänger in Form eines mobilen Datensammlers (5) oder stationären Datensammlers (5) zu senden und
wobei für den Betrieb des Verbrauchsdatenerfassungsgeräts (6) ein erster Betriebsmodus (11) vorgesehen ist, in dem die Übertragung der Verbrauchsdaten über das erste Funksystem (1) erfolgt, und
ein zweiter Betriebsmodus (12) vorgesehen ist, welcher im Vergleich zum ersten Betriebsmodus (11) eine geringere Sendehäufigkeit und/oder Empfangsbereitschaft hat, und
zwischen dem ersten und zweiten Betriebsmodus (11 bzw. 12) umschaltbar ist,
wobei das Kommunikationsmodul (14) über eine Funkeinrichtung (19) für das zweites Funksystem (2) verfügt,
mittels dem das Umschalten von erstem und zweitem Betriebsmodus (11 bzw. 12) durchführbar ist und
wobei das zweite Funksystem (2) im Vergleich zum ersten Funksystem (1) eine höhere Reichweite hat.

11. System nach Anspruch 10, **dadurch gekennzeichnet, dass** der zweite Betriebsmodus (12) am Verbrauchsdatenerfassungsgerät (6) im Vergleich zum ersten Betriebsmodus (11) einen geringeren Stromverbrauch im Nichtsendebetrieb bedingt.

12. System nach einem der Ansprüche 10 bis 11, **dadurch gekennzeichnet, dass** bei dem zweiten Betriebsmodus (12) das erste Funksystem (1) zumindest teilweise, vorzugsweise vollständig, deaktiviert ist.

13. System nach einem der Ansprüche 10 bis 12, **dadurch gekennzeichnet, dass** das Umschalten zwischen erstem und zweitem Betriebsmodus (11 bzw. 12) ein Einschalten und/oder Abschalten des ersten Funksystems (1) umfasst.

14. System nach einem der Ansprüche 10 bis 13, **dadurch gekennzeichnet, dass** im Speicher (13) mindestens ein Sendezeitplan hinterlegt ist, der über das zweite Funksystem (2) konfigurierbar und/oder aktivierbar und/oder deaktivierbar ist.

15. System nach einem der Ansprüche 10 bis 14, **dadurch gekennzeichnet, dass** Parameter des ersten Funksystems (1) über das zweite Funksystem (2) konfigurierbar sind.

16. System nach einem der Ansprüche 10 bis 15, **dadurch gekennzeichnet, dass** das erste Funksystem (1) ausgebildet ist einen SRD- und/oder einen ISM-Frequenzbereich zu verwenden.

## Claims

1. Method for operating an electronic consumption-data acquisition device (6),
wherein the consumption data are transferred wirelessly to a receiver in the form of a mobile data collector (5) or static data collector (5) by way of a first radio system (1), and
wherein for operating the consumption-data acquisition device (6) there is provision for a first operating mode (11), in which the consumption data are transferred by way of the first radio system (1), and
there is provision for a second operating mode (12), which has a lower rate of data transmission and/or readiness to receive compared with the first operating mode (11), and
it is possible to switch between the first and second operating modes (11 and 12 respectively), wherein the switchover for the first and second operating modes (11 and 12 respectively) is performed by means of a second radio system (2), which comprises a communication unit (7) that is in contact with a switching centre (9) of an energy supplier and that transmits control signals comprising switchover signals (21, 22) to the consumption-data acquisition device (6) for the switchover between the first and second operating modes (11 and 12 respectively), and wherein
the second radio system (2) has a greater range compared with the first radio system (1).

2. Method according to Claim 1, **characterized in that** the second operating mode (12) at the consumption-data acquisition device (6) has a lower power consumption in non-transmit mode compared with the first operating mode (11).

3. Method according to either of the preceding claims,
**characterized in that** in the second operating mode (12) the first radio system (1) is at least partially, preferably fully, in the deactivated state.

4. Method according to one of the preceding claims,
**characterized in that** the times of the switchover between the first and second operating modes (11 and 12 respectively) are individually variable according to the planned transfer of the consumption data.

5. Method according to one of the preceding claims,
**characterized in that** the switchover between the first and second operating modes (11 and 12 respectively) comprises switching the first radio system (1) on and/or off.

6. Method according to one of the preceding claims,
**characterized in that** at least one transmission schedule is stored in the consumption-data acquisition device (6), which transmission schedule is configurable and/or activable and/or deactivable by way of the second radio system (2).

7. Method according to one of the preceding claims,
**characterized in that** parameters of the first radio system (1) are configurable by way of the second radio system (2).

8. Method according to one of the preceding claims,
**characterized in that** the first radio system (1) uses an SRD frequency band and/or an ISM frequency band.

9. Method according to one of the preceding claims,
**characterized in that** there is provision for a multiplicity of individual consumption-data acquisition devices (6) that convey consumption data to the receiver, wherein in particular there is provision for the individual consumption-data acquisition devices (6) to be provided with individual transmission schedules and/or for an individual consumption-data acquisition device (6), which is switched between the first and second operating modes (11 and 12 respectively), to be selected from the multiplicity of consumption-data acquisition devices (6) by means of the second radio system (2).

10. System comprising
a first radio system (1),
a second radio system (2), which comprises a communication unit (7) that is in contact with a switching centre (9) of an energy supplier and that is designed to transmit control signals comprising switchover signals (21, 22) to the consumption-data acquisition device (6) for the switchover between the first and second operating modes (11 and 12 respectively), and
a consumption-data acquisition device (6) having a measuring unit (20) for acquiring the consumption data,
a memory (13) that can store the consumption data, at least one processor (15), and
a communication module (14) for consumption data transfer, wherein
the communication module (14) is designed to use the first radio system (1) to transmit consumption data to a receiver in the form of a mobile data collector (5) or static data collector (5) and wherein for operating the consumption-data acquisition device (6) there is provision for a first operating mode (11), in which the consumption data are transferred by way of the first radio system (1), and
there is provision for a second operating mode (12), which has a lower rate of transmission and/or readiness to receive compared with the first operating mode (11), and
it is possible to switch between the first and second operating modes (11 and 12 respectively), wherein the communication module (14) has a radio device (19) for the second radio system (2),
which can be used to perform the switchover for the first and second operating modes (11 and 12 respectively), and
wherein the second radio system (2) has a greater range compared with the first radio system (1).

11. System according to Claim 10, **characterized in that** the second operating mode (12) at the consumption-data acquisition device (6) has a lower power consumption in non-transmit mode compared with the first operating mode (11).

12. System according to either of Claims 10 and 11,
**characterized in that** in the second operating mode (12) the first radio system (1) is at least partially, preferably fully, in the deactivated state.

13. System according to one of Claims 10 to 12,
**characterized in that** the switchover between the first and second operating modes (11 and 12 respectively) comprises switching the first radio system (1) on and/or off.

14. System according to one of Claims 10 to 13,
**characterized in that** the memory (13) stores at least one transmission schedule that is configurable and/or activable and/or deactivable by way of the second radio system (2).

15. System according to one of Claims 10 to 14,
**characterized in that** parameters of the first radio system (1) are configurable by way of the second radio system (2).

16. System according to one of Claims 10 to 15,
**characterized in that** the first radio system (1) is designed to use an SRD frequency band and/or an ISM frequency band.

## Revendications

1. Procédé de fonctionnement d'un dispositif électronique d'acquisition de données de consommation (6),
les données de consommation étant transmises sans fil, par le biais d'un premier système radio (1), à un récepteur sous la forme d'un collecteur de données mobile (5) ou d'un collecteur de données stationnaire (5), et
un premier mode de fonctionnement (11), dans lequel la transmission des données de consommation est effectuée par le biais du premier système radio (1), étant prévu pour le fonctionnement du dispositif d'acquisition de données de consommation (6), et
un deuxième mode de fonctionnement (12) étant prévu qui présente une fréquence d'émission et/ou une disponibilité de réception inférieure à celles du premier mode de fonctionnement (11), et
une commutation pouvant être effectuée entre le premier et le deuxième mode de fonctionnement (11 respectivement 12),
la commutation du premier et du deuxième mode de fonctionnement (11 respectivement 12) étant effectuée au moyen d'un deuxième système radio (2) qui comprend une unité de communication (7) qui est en contact avec un centre de commutation (9) d'un prestataire d'énergie et qui envoie, pour la commutation entre le premier et le deuxième mode de fonctionnement (11 respectivement 12), des signaux de commande comprenant des signaux de commutation (21, 22) au dispositif d'acquisition de données de consommation (6), et
le deuxième système radio (2) ayant une portée supérieure à celle du premier système radio (1).

2. Procédé selon la revendication 1, **caractérisé en ce que**, au niveau du dispositif d'acquisition de données de consommation (6), le deuxième mode de fonctionnement (12) présente, en fonctionnement sans émission, une consommation en courant inférieure à celle du premier mode de fonctionnement (11).

3. Procédé selon l'une des revendications précédentes, **caractérisé en ce que** dans le deuxième mode de fonctionnement (12) le premier système radio (1) est au moins partiellement, de préférence totalement, désactivé.

4. Procédé selon l'une des revendications précédentes, **caractérisé en ce que** les instants de commutation entre le premier et le deuxième mode de fonctionnement (11 respectivement 12) peuvent être modifiés individuellement en fonction de la transmission planifiée des données de consommation.

5. Procédé selon l'une des revendications précédentes, **caractérisé en ce que** la commutation entre le premier et le deuxième mode de fonctionnement (11 respectivement 12) comprend la mise en circuit et/ou la mise hors circuit du premier système radio (1).

6. Procédé selon l'une des revendications précédentes, **caractérisé en ce qu'**au moins un programme d'émission, qui peut être configuré et/ou activé et/ou désactivé par le biais du deuxième système radio (2), est stocké dans le dispositif d'acquisition de données de consommation (6).

7. Procédé selon l'une des revendications précédentes, **caractérisé en ce que** des paramètres du premier système radio (1) peuvent être configurés par le biais du deuxième système radio (2).

8. Procédé selon l'une des revendications précédentes, **caractérisé en ce que** le premier système radio (1) utilise une domaine de fréquences SRD et/ou ISM.

9. Procédé selon l'une des revendications précédentes, **caractérisé en ce qu'**un grand nombre de dispositifs individuels d'acquisition de données de consommation (6) sont prévus qui transmettent des données de consommation au récepteur, des programmes d'émission individuels étant notamment prévus d'être fournis aux dispositifs d'acquisition de données de consommation individuels (6) et/ou un dispositif individuel d'acquisition de données de consommation (6), qui est commuté entre le premier et le deuxième mode de fonctionnement (11 respectivement 12), étant notamment prévu d'être sélectionné parmi le grand nombre de dispositifs d'acquisition de données de consommation (6) au moyen du deuxième système radio (2) .

10. Système comprenant
un premier système radio (1),
un deuxième système radio (2) qui comprend une unité de communication (7) qui est en contact avec un centre de commutation (9) d'un prestataire d'énergie et qui est conçue, afin de commuter entre le premier et le deuxième mode de fonctionnement (11 respectivement 12), pour envoyer des signaux de commande, comprenant des signaux de commutation (21, 22), au dispositif d'acquisition de données de consommation (6) et
un dispositif d'acquisition de données de consommation (6) pourvu
d'une unité de mesure (20) destinée à l'acquisition des données de consommation,
d'une mémoire (13) dans laquelle les données de consommation peuvent être stockées,
d'au moins un processeur (15), et
d'un module de communication (14) destiné à la transmission de données de consommation,
le module de communication (14) étant conçu pour envoyer des données de consommation, par le biais du premier système radio (1), à un récepteur se présentant sous la forme d'un collecteur de données mobile (5) ou d'un collecteur de données stationnaire (5) et
un premier mode de fonctionnement (11), dans lequel la transmission des données de consommation est effectuée par le biais du premier système radio (1), étant prévu pour le fonctionnement du dispositif d'acquisition de données de consommation (6), et
un deuxième mode de fonctionnement (12) étant prévu qui présente une fréquence d'émission et/ou une disponibilité de réception inférieure à celles du premier mode de fonctionnement (11), et
une commutation pouvant être effectuée entre le premier et le deuxième mode de fonctionnement (11 respectivement 12),
le module de communication (14) disposant d'une installation radio (19) destinée au deuxième système radio (2),
au moyen duquel la commutation peut être effectuée entre le premier et le deuxième mode de fonctionnement (11 respectivement 12) et
le deuxième système radio (2) ayant une portée supérieure à celle du premier système radio (1).

11. Système selon la revendication 10, **caractérisé en ce que**, au niveau du dispositif d'acquisition de données de consommation (6), le deuxième mode de fonctionnement (12) nécessite, en fonctionnement sans émission, une consommation de courant inférieure à celle du premier mode de fonctionnement (11).

12. Système selon l'une des revendications 10 à 11, **caractérisé en ce que**, dans le deuxième mode de fonctionnement (12), le premier système radio (1) est au moins partiellement, de préférence totalement, désactivé.

13. Système selon l'une des revendications 10 à 12, **caractérisé en ce que** la commutation entre le premier et le deuxième mode de fonctionnement (11 respectivement 12) comprend la mise en circuit et/ou la mise hors circuit du premier système radio (1).

14. Système selon l'une des revendications 10 à 13, **caractérisé en ce qu'**au moins un programme d'émission, qui peut être configuré et/ou activé et/ou désactivé par le biais du deuxième système radio (2), est stocké dans la mémoire (13).

15. Système selon l'une des revendications 10 à 14, **caractérisé en ce que** des paramètres du premier système radio (1) peuvent être configurés par le biais du deuxième système radio (2).

16. Système selon l'une des revendications 10 à 15, **caractérisé en ce que** le premier système radio (1) est conçu pour utiliser un domaine de fréquences SRD et/ou ISM.
